# EUROPÄISCHE PATENTANMELDUNG

(11) **EP 4 009 544 A1**
(43) Veröffentlichungstag der Anmeldung: **08.06.2022**
(21) Anmeldenummer: 21210648.8
(22) Anmeldetag: 26.11.2021
(51) Int. Cl.: H04B 7/185, H04W 72/00, H04W 84/18, H04W 16/00, H04B 10/112

(54) **VERFAHREN ZUR ETABLIERUNG EINES FREIRAUMDATENÜBERTRAGUNGSKANALS**

(30) Priorität: 02.12.2020 DE 102020131966
(71) Anmelder: Airbus Defence and Space GmbH, 82024 Taufkirchen (DE)
(72) Erfinder: Shortt, Kevin, 82024 Taufkirchen (DE); Feo Arenis, Dr. Sergio, 82024 Taufkirchen (DE); Helle, Philipp, 82024 Taufkirchen (DE); Strobel, Carsten, 82024 Taufkirchen (DE)
(74) Vertreter: Isarpatent

(57) **Zusammenfassung**

Ein Verfahren zur Etablierung eines Freiraumdatenübertragungskanals zwischen beweglichen und/oder räumlich fixierten Netzwerkknoten umfasst die Schritte des Sammelns von dynamischen Positionsinformationen einer Vielzahl beweglicher Netzwerkknoten und statischen Positionsinformationen einer Vielzahl räumlich fixierter Netzwerkknoten, des Berechnens von spezifischen und knotenabhängigen Kennzahlen für jeden der beweglichen oder räumlich fixierten Netzwerkknoten, die für den Aufbau und die Aufrechterhaltung von gerichteten Punkt-zu-Punkt-Verbindungen relevant sind, in Abhängigkeit von den gesammelten dynamischen und statischen Positionsinformationen, des Erstellens einer Priorisierungsliste der Vielzahl beweglicher oder räumlich fixierter Netzwerkknoten anhand der bestimmten knotenabhängigen Kennzahlen, des Überprüfens, für den in der erstellten Priorisierungsliste höchstpriorisierten der Vielzahl beweglicher oder räumlich fixierter Netzwerkknoten, welche einer Auswahl von beweglichen oder räumlich fixierten Netzwerkknoten für den Aufbau eines gerichteten Freiraumdatenübertragungskanals mit dem höchstpriorisierten der Vielzahl beweglicher oder räumlich fixierter Netzwerkknoten in Frage kommen, und des Aufbauens einer gerichteten Freiraumdatenübertragungskanals zwischen einem der in Frage kommenden Netzwerkknoten der Auswahl von beweglichen oder räumlich fixierten Netzwerkknoten und dem höchstpriorisierten der Vielzahl beweglicher oder räumlich fixierter Netzwerkknoten.

## Beschreibung

### TECHNISCHES GEBIET DER ERFINDUNG

Die Erfindung betrifft Verfahren zur Etablierung von Freiraumdatenübertragungskanälen, insbesondere im Zusammenhang mit dem Aufbau und der Aufrechterhaltung von gerichteten Kommunikationsnetzwerken in der Luft-Boden-Mobilkommunikation.

### TECHNISCHER HINTERGRUND

Herkömmliche Luft-Boden-Mobilkommunikation stützt sich auf Kommunikationskanäle, die auf ungerichteter, d.h. omnidirektionaler Hochfrequenzkommunikation (HF) beruhen. Ebenso sind der Aufbau und die Aufrechterhaltung von Netzwerken für die Luft-Boden-Mobilkommunikation auf Techniken gestützt, die für omnidirektionaler HF-Kommunikation genutzt werden.

Die Einbindung der optischen Freiraumkommunikation ("free space optical communication", FSOC), auch optische Freiraumdatenübertragung genannt, in Luft-Boden-Netze ermöglicht die Ausdehnung bodengestützter Backbone-Fasernetze auf Flugzeuge und Raumfahrzeuge. Die Integration von FSOC-Technologien in das Europäische Luftfahrtnetz (EAN) ermöglicht eine beispiellose Konnektivität für alle Beteiligten in der gesamten Luftfahrtindustrie. Für FSOC-Anwendungen entwickelte Betriebsprozesse können ebenso auf die Satellitenkommunikation für GEO- und LEO-Architekturen übertragen werden.

Eng vernetzte HF-Kommunikationsnetzwerke werden auch als Maschennetzwerke oder Mesh-Netzwerke bezeichnet. Die Konnektivität zwischen einzelnen Netzwerkknoten eines Mesh-Netzwerks ist sehr hoch, so dass die Zuverlässigkeit und Verfügbarkeit des Mesh-Netzwerks besonders gut ist. Mesh-Netzwerke, die auf FSOC beruhen, sorgen aufgrund der höheren Frequenz der Trägerwellen im Vergleich zur HF-Kommunikation für wesentlich höhere Datenraten und geringere Störungsanfälligkeit durch Mehrpfadstreuung und Echos. Im optischen Frequenzbereich sind außerdem viele Frequenzbänder verfügbar.

Als Mesh-Netzwerke ausgebildete optische Kommunikationsnetzwerke setzen sich im Allgemeinen aus einem Satz an direkten Punkt-zu-Punkt-Verbindungen zusammen. Um die Resilienz des Mesh-Netzwerks zu erhöhen, ist es wünschenswert, den Aufbau der einzelnen FSOC-Netzwerkverbindungen zu stabilisieren und dadurch die Verfügbarkeit des Mesh-Netzwerks zu verbessern. Solche optischen Kommunikationsnetzwerke, die bewegliche Netzwerkknoten miteinander verbinden, weisen einerseits aufgrund der direkten, gerichteten Punkt-zu-Punkt-Verbindungen eine deterministische Natur auf. Andererseits ist es aber notwendig, die genaue Position der beweglichen Netzwerkknoten zu bestimmen, um gerichtete Punkt-zu-Punkt-Verbindungen überhaupt sinnvoll etablieren zu können.

In optischen Kommunikationsnetzwerken ist der Datendurchsatz der über gerichtete Punkt-zu-Punkt-Verbindungen vermittelten Daten erheblich höher als bei omnidirektionalen HF-Verbindungen, so dass schon geringfügige temporäre Unterbrechungen der Punkt-zu-Punkt-Verbindungen zu sehr hohen potentiellen Datenverlusten führen würden.

Die Druckschrift EP 3 014 792 B1 offenbart Verfahren zur Implementierung eines adaptiven optischen Freiraumnetzes mit einer hochkonnektiven, dynamischen Maschen-Topologie.

### ZUSAMMENFASSUNG DER ERFINDUNG

Eine der Aufgaben der Erfindung liegt demnach darin begründet, Lösungen für die für die Planung, Auslegung, Aufrechterhaltung, Koordinierung und Optimierung von gerichteten Kommunikationsverbindungen in Netzwerken hoher Bandbreite zu finden.

Diese und andere Aufgaben werden durch ein Verfahren mit den Merkmalen des Anspruchs 1 gelöst.

Gemäß einem ersten Aspekt der Erfindung umfasst ein Verfahren zur Etablierung eines Freiraumdatenübertragungskanals zwischen einem beweglichen Netzwerkknoten und einem räumlich fixierten Netzwerkknoten die Schritte des Sammelns von dynamischen Positionsinformationen einer Vielzahl beweglicher Netzwerkknoten und statischen Positionsinformationen einer Vielzahl räumlich fixierter Netzwerkknoten, des Berechnens von spezifischen und knotenabhängigen Kennzahlen für jeden der beweglichen oder räumlich fixierten Netzwerkknoten, die für den Aufbau und die Aufrechterhaltung von gerichteten Punkt-zu-Punkt-Verbindungen relevant sind, in Abhängigkeit von den gesammelten dynamischen und statischen Positionsinformationen, des Erstellens einer Priorisierungsliste der Vielzahl beweglicher oder räumlich fixierter Netzwerkknoten anhand der bestimmten knotenabhängigen Kennzahlen, des Überprüfens, für den in der erstellten Priorisierungsliste höchstpriorisierten der Vielzahl beweglicher oder räumlich fixierter Netzwerkknoten, welche einer Auswahl von beweglichen oder räumlich fixierten Netzwerkknoten für den Aufbau eines gerichteten Freiraumdatenübertragungskanals mit dem höchstpriorisierten der Vielzahl beweglicher oder räumlich fixierter Netzwerkknoten in Frage kommen, und des Aufbauens einer gerichteten Freiraumdatenübertragungskanals zwischen einem der in Frage kommenden Netzwerkknoten der Auswahl von beweglichen oder räumlich fixierten Netzwerkknoten und dem höchstpriorisierten der Vielzahl beweglicher oder räumlich fixierter Netzwerkknoten .

Eine wesentliche Idee der Erfindung besteht darin, Lösungen für die Planung, Auslegung, Aufrechterhaltung, Koordinierung und Optimierung von gerichteten, insbesondere optischen, Kommunikationsverbindungen in Netzwerken hoher Bandbreite, die sich aus einer heterogenen Mischung aus stationären und mobilen Netzwerkknoten, wie etwa Schiffen, Zügen, Autos, Flugzeugen, Raumschiffen oder Satelliten, zusammensetzt, zu finden. Diese Lösungen dienen dem Aufbau eines zusammenhängenden Kommunikationsnetzes, das als Erweiterung bestehender stationärer photonischer Netze dienen kann.

Einer der Vorteile des erfindungsgemäßen Verfahrens liegt darin begründet, dass die Zuverlässigkeit, Redundanz und Ausfallsicherheit von gerichteten Freiraumdatenübertragungskommunikationsnetzen erhöht werden kann, was besonders bei Datenübertragungen mit sehr hoher Bandbreite in dynamischen Netzwerkumgebungen hervorragende Verbesserungen bewirken kann.

Gemäß einigen Ausführungsformen des erfindungsgemäßen Verfahrens können die knotenabhängigen Kennzahlen gegenwärtige oder zu erwartende Betriebszustände bereits existierender Datenübertragungsverbindungen mit bodengestützten Kommunikationsnetzen, Netzwerkpriorisierung, Datenrückstau und/oder Wetterdaten aus der Umgebung der beweglichen Netzwerkknoten aufweisen.

Gemäß einigen weiteren Ausführungsformen des erfindungsgemäßen Verfahrens kann das Sammeln der Positionsinformationen über eine dedizierte Einrichtung in einem bodengestützten Kommunikationsnetz erfolgen.

Gemäß einigen weiteren Ausführungsformen des erfindungsgemäßen Verfahrens können die dynamischen Positionsinformationen einer Vielzahl beweglicher Netzwerkknoten in einer Datenbank dynamischer Positionsdaten der Vielzahl der beweglichen Netzwerkknoten gespeichert und fortlaufend aktualisiert werden.

Gemäß einigen weiteren Ausführungsformen des erfindungsgemäßen Verfahrens können für den höchstpriorisierten der Vielzahl beweglicher oder räumlich fixierter Netzwerkknoten die Schritte des Überprüfens und des Aufbaus wiederholt werden, um ein oder mehrere redundante Freiraumdatenübertragungskanäle mit anderen der in Frage kommenden Netzwerkknoten der Auswahl von beweglichen oder räumlich fixierten Netzwerkknoten zu etablieren.

Gemäß einigen weiteren Ausführungsformen des erfindungsgemäßen Verfahrens kann für einen der nach dem Überprüfen für den Aufbau eines gerichteten Freiraumdatenübertragungskanals mit dem höchstpriorisierten der Vielzahl beweglicher oder räumlich fixierter Netzwerkknoten in Frage kommenden Auswahl von Netzwerkknoten ein Kappen bestehender gerichteter Freiraumdatenübertragungsverbindungen erfolgen, um für den höchstpriorisierten der Vielzahl beweglicher oder räumlich fixierter Netzwerkknoten Verbindungskapazitäten zu schaffen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Darstellung einer beispielhaften Luft-Boden-Netzwerktopologie gemäß einer Ausführungsform der Erfindung; und
Fig. 2 ein abstrahiertes Flussdiagramm eines beispielhaften Verfahrens zur Etablierung eines gerichteten Freiraumdatenübertragungskanals zwischen beweglichen und/oder räumlich fixierten Netzwerkknoten gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

Gerichtete Freiraumdatenübertragung beruht auf einer Datenübertragung mittels ungeführter, gerichteter elektromagnetischer Wellen, beispielsweise Radarwellen, Mikrowellen oder Licht. Als Spezialfall beruht die optische Freiraumdatenübertragung ("free space optical communication", FSOC) auf einer Datenübertragung mittels ungeführter, gerichteter elektromagnetischer Wellen im sichtbaren, infraroten oder ultravioletten Frequenzbereich. Dabei können die übertragenen Datensignale in Entfernungen von bis zu mehreren hundert Kilometern von einem Empfänger empfangen werden. Optische Freiraumdatenübertragung ist dem Richtfunk insofern ähnlich, als dass bei der Ausbreitung von für den Richtfunk genutzten elektromagnetischen Wellen ähnliche physikalische Wirkprinzipien zum Tragen kommen. Mit der FSOC können Datenübertragungsraten von bis zu 100 GBit/s erreicht werden.

In typischen optischen Kommunikationsnetzwerken mit fest installierten, d.h. räumlich unbeweglichen Netzwerkknoten, wie etwa Glasfasernetzwerken oder HF-Backhaul-Netzwerken, findet der Datenverkehr zwischen genau definierten Punkten innerhalb des Netzwerks statt. Da sich diese Punkte im Verhältnis zueinander nicht ändern, ist das Netzwerk vollständig deterministisch, so dass jedweder Datenverkehr vorhersagbar und planbar zu jedem Zeitpunkt zuverlässig weitergeleitet werden kann. Für den Fall, dass eine der Punkt-zu-Punkt-Verbindungen unterbrochen werden sollte, bestehen deterministische Lösungen, um den Datenverkehr unter Aussparung der unterbrochenen Verbindung dennoch zu jedem Punkt des Netzwerks weiterzuleiten.

In gerichteten Kommunikationsnetzwerken mit einer heterogenen Mischung aus stationären und mobilen Netzwerkknoten fällt dieser Determinismus teilweise weg - um gerichtete, und insbesondere optische, Kommunikationsverbindungen als gerichtete Punkt-zu-Punkt-Verbindungen jederzeit zuverlässig aufrechterhalten zu können, werden weitergehende Lösungen benötigt, die in der Lage sind, sich dynamisch ändernde Netzwerkkonfigurationen in der dynamischen Verbindungsplanung entsprechend zu berücksichtigen. Dies ist umso wichtiger, je höher die verfügbare Bandbreite der Punkt-zu-Punkt-Verbindungen des Netzwerks ist, denn bei steigender Datenrate steigen bei gleichbleibender Dauer eines potentiellen Verbindungsausfalls die potentiellen Datenverluste.

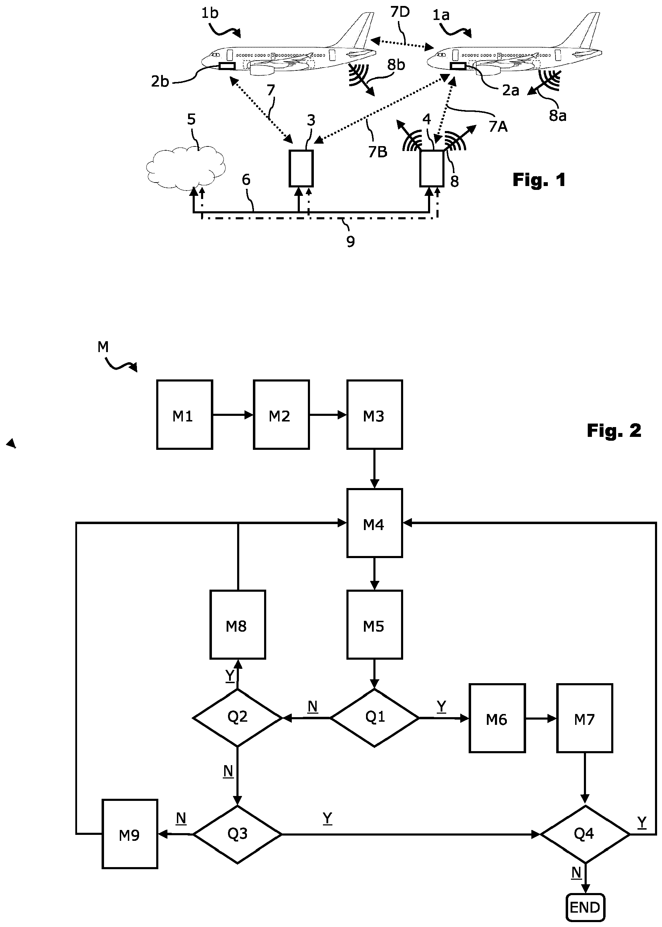

Fig. 1 zeigt eine schematische Darstellung einer beispielhaften Luft-Boden-Netzwerktopologie, bei der bewegliche Netzwerkknoten - hier beispielhaft als Flugzeuge 1a und 1b illustriert - über gerichtete Punkt-zu-Punkt-Verbindungen mit räumlich fixierten Netzwerkknoten - hier beispielhaft als landgebundene Kommunikationstürme bzw. Bodenstationen 3 und 4 illustriert - verbunden werden sollen. Weiterhin können auch die beweglichen Netzwerkknoten untereinander gerichtete Kommunikationsverbindungen etablieren.

Jeder bewegliche Netzwerkknoten 1a und 1b weist jeweils ein flaches optisches Kommunikationsterminal mit einem oder mehreren Kommunikationsendgeräten 2a bzw. 2b auf. Im Falle von Flugzeugen kann das jeweilige Kommunikationsendgerät 2a bzw. 2b an einer Außenfläche des Flugzeugs montiert werden, wie beispielsweise an einem Teil der Rumpfunterseite. Das Kommunikationsendgerät kann so konstruiert werden, dass es im Wesentlichen nicht aus der Ebene der Außenfläche des Flugzeugs, an der es montiert ist, herausragt, wodurch jeder zusätzliche Luftwiderstand verringert wird, den das Kommunikationsendgerät sonst erzeugen würde.

Die Kommunikationsendgerät 2a und 2 b können beispielsweise optische Kommunikationsendgeräte 2a und 2b sein und so konfiguriert werden, dass sie mit einer oder mehreren Bodenstationen 3 und 4 über eine optische Freiraumkommunikationsverbindung 7A, 7B, 7C kommunizieren können. Insbesondere kann mehr als eine optische Freiraumkommunikationsverbindung zu verschiedenen der Bodenstationen 3 bzw. 4 unterhalten werden, wodurch ein Übergabeverfahren der beweglichen Netzwerkknotens 1a und 1b zwischen verschiedenen benachbarten Bodenstationen 3 bzw. 4 ermöglicht wird. Auf diese Weise können alle Kommunikationsnetze des beweglichen Netzwerkknotens 1a und 1b mit demselben bodengestützten Kommunikationsnetz 5 verbunden bleiben, mit dem auch die Bodenstationen 3 und 4 verbunden sind. Insbesondere kann das bodengestützte Kommunikationsnetz 5 auf Glasfasernetzwerken 6 basieren, d.h. es kann im Gegensatz zu den drahtlosen optischen Freiraumkommunikations-verbindungen 7A, 7B, 7C draht- oder lichtwellenleitergebunden sein. Die optischen Freiraumkommunikationsverbindungen 7A, 7B, 7C können den Datenaustausch zwischen einem Flugzeugnetz und dem bodengestützten Kommunikationsnetz 6 ermöglichen.

Über die gerichteten Freiraumkommunikationsverbindungen hinaus können zwischen den räumlich fixierten Netzwerkknoten 3 und 4 sowie den beweglichen Netzwerkknoten 1a und 1b auch omnidirektionale, d.h. ungerichtete Kommunikationsverbindungen 8, 8a, 8b unterhalten werden, wie beispielsweise satellitengestützte oder zelluläre Mobilfunkverbindungen wie etwa ein LTEgestütztes "Air-to-Ground"-Netzwerk (A2G) oder auch radargestützte Kommunikationsverbindungen wie etwa Automatic Dependent Surveillance - Broadcast (ADS-B). Hierzu können sowohl in den räumlich fixierten Netzwerkknoten 3 und 4 als auch in den beweglichen Netzwerkknoten 1a und 1b entsprechende Kommunikationsendgeräte für ungerichtete Kommunikation installiert und auf herkömmliche Weise betrieben werden. Entsprechend kann auch das Backbone-Netzwerk 9 für die Weitergabe der über die ungerichteten Kommunikationsverbindungen 8, 8a, 8b übertragenen Daten zwischen dem bodengestützten Kommunikationsnetz 5 und den jeweiligen Bodenstationen 3 bzw. 4 auf herkömmliche Weise eingerichtet werden.

Fig. 2 zeigt ein abstrahiertes Flussdiagramm eines beispielhaften Verfahrens M zur Etablierung eines gerichteten Freiraumdatenübertragungskanals zwischen einem beweglichen oder räumlich fixierten Netzwerkknoten , wie beispielsweise einer gerichteten, insbesondere optischen, Freiraumkommunikationsverbindung 7A, 7B oder 7C zwischen einem der beweglichen Netzwerkknoten 1a und 1b und einem der räumlich fixierten Netzwerkknoten 3 und 4, wie im Zusammenhang mit Fig. 1 illustriert und erläutert. Das Verfahren M kann als Grundlage für ein knotenzentriertes Aufbaumodell eines gerichteten, insbesondere optischen, Freiraumkommunikationsnetzwerks genutzt werden, beispielsweise für den Aufbau eines Kommunikationsnetzwerks hoher Bandbreite in der Luft-Boden-Mobilkommunikation zwischen Bodenstationen und Flugzeugen, Raumschiffen und/oder Satelliten. Im Folgenden wir auf die Etablierung optischer Freiraumkommunikationsübertragungskanäle zur beispielhaften Darstellung des Verfahrens M Bezug genommen, wobei jedoch jegliche Art von gerichteten Freiraumkommunikationsverbindungen, wie etwa auf der Basis von Radar- oder Mikrowellen ebenso möglich ist.

In einem ersten Schritt M1 werden Informationen über Positionen, Bewegungsdaten und berechnete oder vorhergesagte Trajektorien aller oder zumindest einiger beweglicher Netzwerkknoten 1a, 1b gesammelt und an einer zentralen Stelle in einer Datenbank zusammengeführt. Diese Informationen umfassen insbesondere dynamische Positionsinformationen, da sich die örtlichen Koordinaten der beweglichen Netzwerkknoten 1a, 1b stets ändern bzw. ändern können. Gleichermaßen können statische Positionsinformationen einer Vielzahl räumlich fixierter Netzwerkknoten 3 bzw. 4 gesammelt werden. Die statischen Positionsinformationen entsprechen quasi Positionsinformationen mit einer Bewegungsgeschwindigkeit und Beschleunigung von Null. Die Sammlung der Informationen kann über eine dedizierte Einrichtung im bodengestützten Kommunikationsnetz 5 erfolgen. Diese Informationen können beispielsweise über eine Schiebefensterfunktion für einen bestimmten Zeitraum in der Vergangenheit und/oder einen bestimmten Zeitraum in der Zukunft gesammelt und fortlaufend, d.h. in definierten Zeitabständen aktualisiert werden. Die Sammlung der Informationen kann beispielsweise über omnidirektionale, d.h. ungerichtete Kommunikationsverbindungen 8a, 8b erfolgen, über die das bodengestützte Kommunikationsnetz 5 ohnehin schon mit den beweglichen Netzwerkknoten 1a, 1b verbunden ist.

Die Datenbank dynamischer Positionsdaten der beweglichen Netzwerkknoten 1a, 1b dient als Basis für die in Schritt M2 vorgenommene Berechnung bzw. Bestimmung spezifischer und knotenabhängiger Kennzahlen bzw. Leistungsmerkmale, die für den Aufbau und die Aufrechterhaltung von gerichteten Punkt-zu-Punkt-Verbindungen relevant sind. Beispiele für die knotenabhängigen Kennzahlen bzw. Leistungsmerkmale sind eine vorhergesagte Dauer der Nähe zu verschiedenen Bodenstationen, der gegenwärtige oder zu erwartende Betriebszustand bereits existierender Datenübertragungsverbindungen mit bodengestützten Kommunikationsnetzen (Verfügbarkeit, Zuverlässigkeit, Latenz, Anzahl, QoS, Bandbreite, Frequenzbereich etc.), Netzwerkpriorisierung, Datenrückstau, Wetterdaten aus der Umgebung der beweglichen Netzwerkknoten 1a, 1b oder ähnliche kommunikationsrelevante Knoteneigenschaften.

In Schritt M3 wird dann anhand der bestimmten knotenabhängigen Kennzahlen bzw. Leistungsmerkmale eine Priorisierungsliste erstellt. Diese Priorisierungsliste kann die verfügbaren beweglichen und räumlich fixierten Netzwerkknoten 1a, 1b, 3, 4 beispielsweise nach Dringlichkeit der Netzwerkanbindung an ein bodengestütztes Kommunikationsnetz 5 sortieren. Andere Sortierungskriterien können alternativ oder zusätzlich dazu ebenfalls berücksichtigt werden, wie etwa zu erwartende Anzahl verfügbarer Bodenstationen in der Nähe der anzubindenden beweglichen und räumlich fixierten Netzwerkknoten 1a, 1b, 3, 4 oder den prognostizierten Kommunikationsverbindungsstatus in einem bestimmten Zeitraum in der Zukunft.

In Schritt M4 wird als erster Schritt einer je nach Anzahl der beweglichen und räumlich fixierten Netzwerkknoten 1a, 1b, 3, 4 und verfügbaren anderen Netzwerkknoten gegebenenfalls mehrfach zu durchlaufenden Verfahrensschleife einer der anzubindenden beweglichen und räumlich fixierten Netzwerkknoten 1a, 1b, 3, 4 der Priorisierungsliste ausgewählt. Insbesondere kann der am höchsten priorisierte bewegliche bzw. räumlich fixierte Netzwerkknoten 1a, 1b, 3, 4 der gegenwärtig in der Priorisierungsliste befindlichen Netzwerkknoten ausgewählt werden.

In einem darauffolgenden Schritt M5 wird überprüft, welche einer Auswahl von beweglichen oder räumlich fixierten Netzwerkknoten - wie etwa der Bodenstationen 3, 4 des bodengestützten Kommunikationsnetzes 5 - für den Aufbau eines optischen Freiraumdatenübertragungskanals in Frage kommen, d.h. welche der beweglichen oder räumlich fixierten Netzwerkknoten 1a, 1b, 3, 4 eine hinreichende Sichtverbindung hinsichtlich Distanz und Hindernisfreiheit mit dem ausgewählten beweglichen oder räumlich fixierten Netzwerkknoten 1a, 1b, 3, 4 aufweisen. In einem Entscheidungs- bzw. Verzweigungsschritt Q1 wird überprüft, ob eine der nach der Überprüfung in Schritt M5 in Frage kommenden beweglichen oder räumlich fixierten Netzwerkknoten 1a, 1b, 3, 4 aktuelle freie Kapazitäten für den Aufbau eines optischen Freiraumdatenübertragungskanals aufweisen. Sollte dies der Fall sein, wird in Schritt M6 eine Verbindungsanfrage von dem ausgewählten freien Netzwerkknoten an den ausgewählten beweglichen oder räumlich fixierten Netzwerkknoten gesandt, beispielsweise über omnidirektionale, d.h. ungerichtete Kommunikationsverbindungen 8, 8a, 8b, über die der ausgewählte freie Netzwerkknoten mit dem betreffenden beweglichen oder räumlich fixierten Netzwerkknoten verbunden ist. Wenn der Verbindungsaufbau erfolgreich war, d.h. wenn der ausgewählte freie Netzwerkknoten mit dem betreffenden beweglichen oder räumlich fixierten Netzwerkknoten die entsprechenden Verbindungsaufbauparameter erfolgreich ausgehandelt hat, kann in Schritt M7 der nunmehr über einen optischen Freiraumdatenübertragungskanal mit dem bodengestützten Kommunikationsnetz 5 verbundene Netzwerkknoten aus der Priorisierungsliste entfernt werden. Danach wird in einem weiteren Verzweigungsschritt Q4 überprüft, ob überhaupt noch weitere Netzwerkknoten frei sind. Sollte das der Fall sein, kann die Verfahrensschleife beginnend bei Schritt M4 für den Aufbau weiterer, gegebenenfalls redundanter optischer Freiraumdatenübertragungskanäle mit anderen freien Netzwerkknoten bzw. Bodenstationen erneut durchlaufen werden. Alternativ wird das Verfahren M nach dem Verzweigungsschritt Q4 abgebrochen (oder alternativ mit dem nächstrangigen Netzwerkknoten der Priorisierungsliste ab dem Schritt M4 erneut durchlaufen).

Sollte in dem Verzweigungsschritt Q1 allerdings festgestellt werden, dass keine der nach der Überprüfung in Schritt M5 in Frage kommenden Netzwerkknoten 1a, 1b, 3, 4 aktuelle freie Kapazitäten für den Aufbau eines optischen Freiraumdatenübertragungskanals aufweist oder dass überhaupt kein Netzwerkknoten 1a, 1b, 3, 4 in Frage kommt, wird in einem Verzweigungsschritt Q2 überprüft, ob überhaupt noch weitere Netzwerkknoten frei sind. Wenn dies der Fall ist, wird der Netzwerkknoten zunächst von der Priorisierungsliste entfernt oder alternativ in der Priorisierungsliste zurückgestellt und die Verfahrensschleife beginnend bei Schritt M4 wird mit dem nächstrangigen Netzwerkknoten der Priorisierungsliste erneut durchlaufen.

Wenn allerdings überhaupt keine weiteren Netzwerkknoten mehr frei sind, wird überprüft, ob grundsätzlich eine Datenverbindung zwischen dem bodengestützten Kommunikationsnetz 5 und einem der beweglichen Netzwerkknoten 1a, 1b besteht. Sollte dies der Fall sein, kann über den Verzweigungsschritt Q4 das Verfahren M abgebrochen werden. Wenn allerdings derzeit keine Netzwerkknoten mehr verfügbar sind und auch keine Datenverbindung zwischen dem bodengestützten Kommunikationsnetz 5 und einem der beweglichen Netzwerkknoten 1a, 1b besteht, ist es notwendig, die entsprechenden Ressourcen für die Etablierung einer solchen Datenverbindung zu schaffen. Hierzu wird in Schritt M9 - ähnlich wie in Schritt M5 - für den aktuell am höchsten priorisierten beweglichen oder räumlich fixierten Netzwerkknoten eine Auswahl der für den Aufbau eines optischen Freiraumdatenübertragungskanals in Frage kommenden Netzwerkknoten 1a, 1b, 3, 4 bestimmt. Einer dieser Netzwerkknoten 1a, 1b, 3, 4 wird in Schritt M9 ausgewählt und eine der für den ausgewählten Netzwerkknoten bestehenden optischen Freiraumdatenübertragungsverbindungen gekappt, um entsprechende Kapazitäten für den Aufbau einer optischen Freiraumdatenübertragungsverbindung mit dem gegenwärtig ausgewählten beweglichen Netzwerkknoten 1a, 1b zu schaffen, damit dieser Netzwerkknoten überhaupt mit dem bodengestützten Kommunikationsnetz 5 verbunden werden kann.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Verfahren (M) zur Etablierung eines gerichteten Freiraumdatenübertragungskanals zwischen beweglichen oder räumlich fixierten Netzwerkknoten, mit den Schritten:
Sammeln (M1) von dynamischen Positionsinformationen einer Vielzahl beweglicher Netzwerkknoten (1a, 1b) und statischen Positionsinformationen einer Vielzahl räumlich fixierter Netzwerkknoten (3, 4);
Berechnen (M2) von spezifischen und knotenabhängigen Kennzahlen für jeden der beweglichen oder räumlich fixierten Netzwerkknoten (1a, 1b; 3, 4), die für den Aufbau und die Aufrechterhaltung von gerichteten Punkt-zu-Punkt-Verbindungen relevant sind, in Abhängigkeit von den gesammelten dynamischen und statischen Positionsinformationen;
Erstellen (M3) einer Priorisierungsliste der Vielzahl beweglicher oder räumlich fixierter Netzwerkknoten (1a, 1b; 3, 4) anhand der bestimmten knotenabhängigen Kennzahlen;
für den in der erstellten Priorisierungsliste höchstpriorisierten der Vielzahl beweglicher oder räumlich fixierter Netzwerkknoten (1a, 1b; 3, 4), Überprüfen (M5), welche einer Auswahl von beweglichen oder räumlich fixierten Netzwerkknoten (1a, 1b; 3, 4) für den Aufbau eines gerichteten Freiraumdatenübertragungskanals (7A, 7B, 7C) mit dem höchstpriorisierten der Vielzahl beweglicher oder räumlich fixierter Netzwerkknoten (1a, 1b; 3, 4) in Frage kommen;
Aufbau (M6) einer gerichteten Freiraumdatenübertragungskanals (7A, 7B, 7C) zwischen einem der in Frage kommenden Netzwerkknoten der Auswahl von beweglichen oder räumlich fixierten Netzwerkknoten (1a, 1b; 3, 4) und dem höchstpriorisierten der Vielzahl beweglicher oder räumlich fixierter Netzwerkknoten (1a, 1b).

2. Verfahren (M) gemäß Anspruch 1, wobei die knotenabhängigen Kennzahlen gegenwärtige oder zu erwartende Betriebszustände bereits existierender Datenübertragungsverbindungen mit bodengestützten Kommunikationsnetzen, Netzwerkpriorisierung, Datenrückstau und/oder Wetterdaten aus der Umgebung der beweglichen Netzwerkknoten aufweisen.

3. Verfahren (M) gemäß Anspruch 1 oder 2, wobei das Sammeln (M1) der Positionsinformationen über eine dedizierte Einrichtung in einem bodengestützten Kommunikationsnetz (5) erfolgt.

4. Verfahren (M) gemäß einem der Ansprüche 1 bis 3, wobei die dynamischen Positionsinformationen einer Vielzahl beweglicher Netzwerkknoten (1a, 1b) in einer Datenbank dynamischer Positionsdaten der Vielzahl der beweglichen Netzwerkknoten (1a, 1b) gespeichert und fortlaufend aktualisiert werden.

5. Verfahren (M) gemäß einem der Ansprüche 1 bis 4, wobei für den höchstpriorisierten der Vielzahl beweglicher oder räumlich fixierter Netzwerkknoten (1a, 1b; 3, 4) die Schritte des Überprüfens (M5) und des Aufabus (M6) wiederholt werden, um ein oder mehrere redundante Freiraumdatenübertragungskanäle mit anderen der in Frage kommenden Netzwerkknoten der Auswahl von beweglichen oder räumlich fixierten Netzwerkknoten (1a, 1b; 3, 4) zu etablieren.

6. Verfahren (M) gemäß einem der Ansprüche 1 bis 5, wobei für einen der nach dem Überprüfen (M5) für den Aufbau eines gerichteten Freiraumdatenübertragungskanals (7A, 7B, 7C) mit dem höchstpriorisierten der Vielzahl beweglicher oder räumlich fixierter Netzwerkknoten (1a, 1b; 3, 4) in Frage kommenden Auswahl von Netzwerkknoten (1a, 1b; 3, 4) ein Kappen (M9) bestehender gerichteter Freiraumdatenübertragungsverbindungen erfolgt, um für den höchstpriorisierten der Vielzahl beweglicher oder räumlich fixierter Netzwerkknoten (1a, 1b; 3, 4) Verbindungskapazitäten zu schaffen.
